(19) Europäisches Patentamt / European Patent Office / Office européen des brevets

(11) **EP 2 626 723 B1**

(12) **FASCICULE DE BREVET EUROPEEN**

(45) Date de publication et mention
de la délivrance du brevet:
**25.11.2015 Bulletin 2015/48**

(51) Int Cl.:
*G01S 19/22* *(2010.01)*    *G01S 19/42* *(2010.01)*

(21) Numéro de dépôt: **13154428.0**

(22) Date de dépôt: **07.02.2013**

(54) **Procédé d'estimation de la direction d'arrivée de signaux de navigation sur un récepteur après réflexion par des parois dans un système de positionnement par satellite**

Schätzverfahren der Eingangsrichtung von Navigationssignalen in einen Empfänger nach Reflexion durch die Wände eines über Satellit funktionierenden Positioniersystems

Method for estimating the incoming direction of navigation signals in a receiver after reflecting off walls in a satellite positioning system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2012 FR 1200396**

(43) Date de publication de la demande:
**14.08.2013 Bulletin 2013/33**

(73) Titulaires:
• **Thales**
**92200 Neuilly Sur Seine (FR)**
• **CENTRE NATIONAL D'ETUDES SPATIALES**
**75001 Paris (FR)**

(72) Inventeurs:
• **Monnerat, Michel**
**31240 Saint Jean (FR)**
• **Ries, Lionel**
**81290 Viviers les Montagnes (FR)**

(74) Mandataire: **Nguyen, Dominique et al**
**Marks & Clerk France**
**Immeuble Visium**
**22, avenue Aristide Briand**
**94117 Arcueil Cedex (FR)**

(56) Documents cités:
**FR-A1- 2 880 693    US-A1- 2005 179 591**
**US-B1- 6 784 831**

• **ALISON BROWN: "Multipath Rejection Through Spatial Processing", INTERNET CITATION, 19 septembre 2000 (2000-09-19), pages 2330-2337, XP007918743, Extrait de l'Internet: URL:http://www.navsys.com/papers/0009003.p df [extrait le 2000-01-01]**
• **S Rougerie ET AL: "Multipath Mitigation Methods based on Antenna Array", , 24 janvier 2011 (2011-01-24), pages 596-605, XP055034633, Extrait de l'Internet: URL:http://www.ion.org/ search/purchase_pap er.cfm?jp=p&id=9502 [extrait le 2012-08-03]**

EP 2 626 723 B1

**Description**

La présente invention concerne un procédé d'estimation de la direction d'arrivée de signaux de navigation sur un récepteur après réflexion par des parois dans un système de positionnement par satellite. L'invention s'applique à tout système de positionnement par satellites utilisant des récepteurs de type GNSS (Global Navigation Satellite System) tels que des récepteurs GPS (Global Positioning System) ou Galileo et permet d'améliorer la réjection des multi-trajets dans un système de positionnement par satellite.

Dans un système de positionnement par satellites utilisant un récepteur du type GNSS disposé à bord d'un mobile, les signaux de données permettant au récepteur de calculer son positionnement proviennent de différents satellites appartenant à une constellation de satellites de positionnement. La constellation comporte au moins quatre satellites pour déterminer quatre inconnues correspondant aux coordonnées géographiques x, y, z et temporelles t du récepteur. Le positionnement du mobile par le récepteur est réalisé en deux étapes. Dans une première étape, le récepteur fait l'acquisition de signaux radioélectriques constituant des signaux de navigation provenant des quatre satellites de la constellation et dans une deuxième étape, le récepteur évalue les distances séparant le mobile des quatre satellites dont les signaux ont été reçus et détermine la position du mobile en utilisant un procédé par triangulation.

Une erreur commise sur la position d'un mobile peut avoir des conséquences désastreuses dans une application concernant l'aviation civile ou le péage routier géo-localisé.

Il existe de nombreuses sources d'erreur de positionnement pouvant entacher la validité des informations de position déterminées par un système de positionnement par satellite. Une erreur de positionnement peut être due à un problème technique sur la réception des signaux GNSS, tel que par exemple une défaillance du récepteur ou une défaillance des informations transmises par la constellation de satellites utilisée. La fiabilité de la position déterminée par un système de positionnement par satellite dépend également de l'environnement dans lequel se trouve le mobile.

Dans le cas d'une application aéronautique concernant l'aviation civile, le récepteur n'est contraint par aucun obstacle, de sorte que les signaux radioélectriques sont reçus directement des satellites, sans réflexion sur aucune paroi. Dans ce cas, il existe des systèmes SBAS (en anglais : Satellite-Based Augmentation Systems) permettant de fournir une information de confiance relative à la position calculée par le récepteur d'un mobile aéronautique. Les systèmes SBAS contrôlent et bornent en permanence les erreurs commises sur l'orbite des satellites, sur la synchronisation de chaque satellite avec la référence horaire des constellations et les erreurs induites par la propagation des signaux radioélectriques en haute atmosphère et en particulier dans l'Ionosphère.

Les informations fournies par un système SBAS permettent au récepteur du mobile aéronautique de fournir la position du mobile ainsi qu'une borne d'erreur de position.

Les applications de péage routier géo-localisé consistent à déterminer la route empruntée par un mobile terrestre muni d'un récepteur GNSS et à facturer un utilisateur du mobile terrestre lorsque la route empruntée est soumise à un péage. La facturation dépendant de la route utilisée, le récepteur doit délivrer deux informations complémentaires concernant d'une part, la position du mobile et d'autre part, la trajectoire du mobile. Ces informations donnant lieu à une facturation, il est également nécessaire de déterminer une information de confiance concernant la trajectoire utilisée.

Cependant, dans le cas d'une application concernant le péage routier géo-localisé, les conditions de réception des signaux radioélectriques sont beaucoup plus complexes, et beaucoup moins maitrisées que dans le cas d'une application aéronautique. Il est alors beaucoup plus difficile de borner l'erreur de position déterminée par le récepteur.

En milieu urbain, les signaux de navigation émis par l'un ou par deux ou trois des satellites de la constellation peuvent par exemple être arrêtés par des immeubles et ne pas parvenir jusqu'au récepteur du mobile. Dans ce cas, la géométrie de l'ensemble des satellites utilisés pour calculer la position du mobile est affectée ce qui peut rendre le calcul de la position du mobile impossible.

De même, dans un milieu terrestre peu favorable, les signaux de navigation émis par un satellite de la constellation peuvent se réfléchir sur certaines parois avant d'atteindre le récepteur. Ce phénomène, appelé multi-trajet, a un impact important sur la précision de la position calculée par le récepteur. En effet, le chemin mesuré par le récepteur est alors plus long que la distance séparant le mobile du satellite correspondant. Il en résulte une erreur sur le procédé de triangulation et donc sur la position du mobile. Dans ce cas la conséquence est double car d'une part, l'erreur de position est importante et d'autre part, le récepteur n'a aucun moyen de savoir qu'il a commis une erreur, ni d'évaluer l'erreur commise. Or les erreurs commises par le récepteur peuvent induire une erreur de jugement quant à la route empruntée et par conséquent induire une fausse facturation.

Il existe des méthodes de réjection des multi-trajets consistant à utiliser un réseau d'antennes de réception et à analyser le signal reçu par chacune des antennes du réseau pour déterminer les angles d'arrivée de signaux réfléchis par des parois avant d'arriver sur le récepteur. Un exemple de ce type de méthode est décrit notamment dans le document [Multipath mitigation methods based on antenna array, S. Rougerie, ION NTM 2011] et dans le document US 6 784 831. Cependant ces méthodes souffrent d'un handicap très fort dû à la longueur d'onde des signaux considérés. En effet, dans un tel réseau d'antennes, la distance séparant 2 antennes doit être supérieure à la moitié de la longueur d'onde du signal reçu. Une des techniques de réjection classiquement considérée, consiste à former le faisceau d'antenne dans la direction d'arrivée du signal émis par un satellite, ce qui permet de réduire le gain d'antenne dans la direction des réflexions potentielles présentant un angle d'arrivée différent de celui pointant dans la direction du satellite considéré. La directivité d'un tel réseau d'antennes dépend directement du nombre d'antennes utilisé. Une grande directivité, permettant une réjection efficace, nécessite un grand nombre d'antennes, et par suite une grande taille du réseau.

Dans de nombreuses applications, comme des applications de géo-localisation de véhicules, la taille des réseaux est contrainte, et ne peut admettre un grand nombre d'antennes.

Dans ce cas, des méthodes d'identification d'angle d'arrivée des réflexions de signaux sont mises en oeuvre pour atténuer le faisceau dans la ou les directions identifiées. Cependant ces méthodes souffrent de plusieurs problèmes de performances. Comme le montre le document [Multipath mitigation methods based on antenna array, S. Rougerie, ION NTM 2011], un premier problème concerne le processus d'estimation des angles d'arrivée de signaux réfléchis qui nécessite une hypothèse quant au nombre de réflexions à estimer. De l'exactitude de cette hypothèse dépend la performance du processus d'estimation des angles d'arrivée et par suite la performance du processus de réjections des multi-trajets et de leurs impacts sur la qualité de mesure de distance en ligne vue séparant le récepteur du satellite. Un second problème concerne la qualité de la calibration du réseau d'antennes, à savoir la connaissance de la distance exacte séparant les différentes antennes les unes des autres. La performance d'estimation des angles d'arrivée des signaux réfléchis dépend de l'exactitude de cette information.

L'invention a pour but de résoudre ces problèmes et de proposer un procédé d'estimation de la direction d'arrivée de signaux de navigation réfléchis dans un système de positionnement par satellite permettant d'améliorer la réjection des multi-trajets et permettant d'améliorer la qualité d'une mesure de distance de séparation entre un récepteur GNSS et au moins un satellite de la constellation et d'améliorer ainsi la qualité de la mesure de la position du récepteur GNSS situé à bord d'un mobile.

Pour cela, l'invention concerne un procédé d'estimation de la direction d'arrivée de signaux de navigation réfléchis par des parois avant d'arriver à un récepteur d'un système de positionnement par satellite GNSS, le système de positionnement comportant au moins un satellite apte à émettre des signaux de navigation, le récepteur, placé dans un mobile, étant apte à recevoir les signaux de navigation et à estimer la position dudit récepteur, le procédé étant caractérisé en ce qu'il comporte les étapes suivantes :

a. placer un réseau d'antennes comportant au moins deux antennes sur le mobile,

b. placer une carte géographique tridimensionnelle dans le récepteur du mobile,

c. estimer une position du récepteur à partir des signaux de navigation reçus par une antenne du réseau d'antennes,

d. à partir de la carte géographique tridimensionnelle et de la position estimée du récepteur, à se positionner sur une scène correspondant à un environnement dans lequel se trouve le récepteur et à réaliser un lancé de rayon partant du récepteur,

e. déduire, géométriquement, à partir du résultat du lancé de rayon, le nombre de trajets réfléchis sur des parois présentes dans la scène,

f. sélectionner un algorithme d'estimation des angles d'arrivée de multi-trajets, les multi-trajets correspondant à des signaux réfléchis par des parois, initialiser cet algorithme par le nombre de trajets réfléchis déterminés à l'étape e et en déduire les angles d'arrivée des trajets réfléchis sur les parois.

Avantageusement, les angles d'arrivée des multi-trajets sont déterminés, par l'algorithme sélectionné, à partir d'une analyse des signaux reçus par chacune des antennes du réseau d'antennes.

Avantageusement, avant de réaliser l'étape c relative à l'estimation de la position du récepteur, le procédé comporte une étape préliminaire consistant à estimer une erreur d'information de distance due à un multi-trajet, l'étape préliminaire consistant :

- à estimer une première pseudo-distance correspondant à une première information de distance entre le satellite et le récepteur obtenue à partir d'un traitement du signal reçu par une première antenne du réseau d'antennes,

- à estimer une deuxième pseudo-distance correspondant à une deuxième information de distance entre le satellite et le récepteur obtenue à partir d'un traitement du signal reçu par une deuxième antenne du réseau d'antennes,

- à réaliser une différence entre les deux estimations obtenues aux étapes a et b et en déduire un écart type mathématique correspondant à cette différence,

- à borner l'erreur d'information de distance due à un multi-trajet par un indicateur dépendant de l'écart type mathématique.

D'autres particularités et avantages de l'invention apparaîtront clairement dans la suite de la description donnée à titre d'exemple purement illustratif et non limitatif, en référence aux dessins schématiques annexés qui représentent :

- figure 1 : un schéma d'un exemple de système routier typique, selon l'invention ;

- figure 2 : Un exemple illustrant la détermination de la position d'un mobile équipé d'un récepteur GNSS, selon l'invention ;
- figure 3 : un schéma illustrant un environnement urbain, selon l'invention ;
- figure 4 : un exemple de réseau d'antennes, selon l'invention.

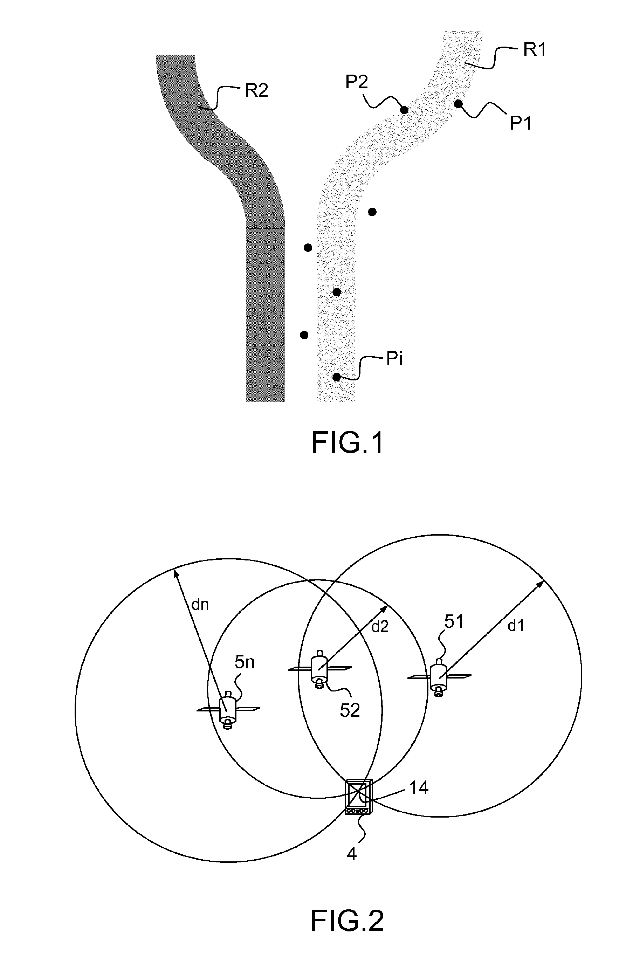

La figure 1 représente un schéma d'un exemple de système routier typique comportant deux routes R1, R2 possibles. La route R1 est une route payante, la route R2 est non payante. Plusieurs mobiles équipés d'un récepteur GNSS, circulent sur la route R1 payante. Les positions P1 à Pi, où i est un nombre entier supérieur à 1, des différents mobiles déterminées par les récepteurs GNSS de chaque mobile, sont affectées d'erreurs. Les erreurs commises peuvent induire une erreur de jugement quant à la route empruntée et par suite une fausse facturation.

Un exemple de détermination de la position d'un mobile équipé d'un récepteur GNSS 4 est représenté schématiquement sur la figure 2. Le récepteur 4 détermine les distances d1, d2,..., dn, où n est un nombre entier supérieur ou égal à quatre, le séparant d'au moins quatre satellites 51, 52,..., 5n de la constellation, seuls trois satellites sont représentés sur la figure 2, puis en déduit le point d'intersection 14 d'au moins quatre sphères, centrées respectivement sur les quatre satellites et ayant une circonférence passant par le récepteur 4, chaque sphère ayant un centre matérialisé par la position d'un satellite 51 à 5n de la constellation et ayant un rayon correspondant à l'une des distances d1 à dn. La position du récepteur GNSS 4, donc du mobile équipé de ce récepteur 4, correspond à ce point d'intersection 14. La mesure des distances d1 à dn est réalisée dans le récepteur 4 par chronométrage du temps d'arrivée de signaux radioélectriques constituant un message de navigation provenant des satellites 51 à 5n. Les signaux radioélectriques émis par chaque satellite sont constitués d'informations nécessaires au calcul de la position du récepteur, ces informations étant modulées par un code qui peut par exemple être un code d'étalement pseudo-aléatoire périodique. Le débit des informations est plus lent que le débit du code. A titre d'exemple, dans le cas d'un signal GPS, le code d'étalement possède une période de 1ms et un débit de 1023 bits par seconde alors que le débit des informations est de 50bits par seconde. L'ensemble des données ajoutées modulo 2 au code d'étalement est transmis sur une porteuse. Typiquement, dans le cas d'un signal GPS, la porteuse est égale à 1,57542GHz. Les informations essentielles provenant de chaque satellite via le message de navigation et que doit traiter le récepteur 4 sont constituées par l'heure d'émission du message et la position du satellite à l'instant de l'émission du signal radioélectrique. D'autres informations sont également transmises par le satellite, telles que certaines corrections à apporter à l'horloge de bord du satellite, des paramètres de corrections de vitesse de propagation des signaux dans les couches de l'atmosphère terrestre et les positions approximatives des autres satellites de la constellation via des données dites d'almanachs. Le satellite transmet dans son message de navigation ses éphémérides (paramètres Kepleriens) permettant au récepteur 4 de calculer la position du satellite dans un référentiel lié à la Terre. Les éphémérides sont constituées dans le cas d'un signal GPS de 16 paramètres répétés toutes les 30 secondes dans le message de navigation.

La position du satellite étant obtenue, il reste au récepteur 4 à détecter l'heure d'émission du message afin de déduire le temps de propagation du signal émis par le satellite correspondant, la distance le séparant dudit satellite et le rayon de la sphère correspondante. L'heure d'émission du message est incluse dans le message de navigation diffusé par le satellite et dans le cas d'un système GPS, est répétée toutes les six secondes. Cependant il convient d'appliquer à l'heure lue dans le message de navigation une correction d'horloge satellitaire afin de ramener l'heure transmise dans un système de référence commun à tous les satellites. Cette correction est transmise toutes les trente secondes. Lorsque l'heure d'émission du message est décodée et corrigée, le récepteur déduit le temps de propagation du signal radioélectrique par différence entre l'heure de réception et l'heure d'émission du message de navigation. Cette information, corrigée des erreurs de vitesse de propagation des signaux dans les différentes couches de l'atmosphère terrestre telles que l'Ionosphère, fournit au récepteur une estimation de la distance le séparant du satellite. En utilisant les signaux provenant d'au moins quatre satellites 51 à 5n de la constellation, le récepteur 4 en déduit sa position 14, et donc celle d'un utilisateur mobile dans lequel il se trouve, par une méthode connue de triangulation.

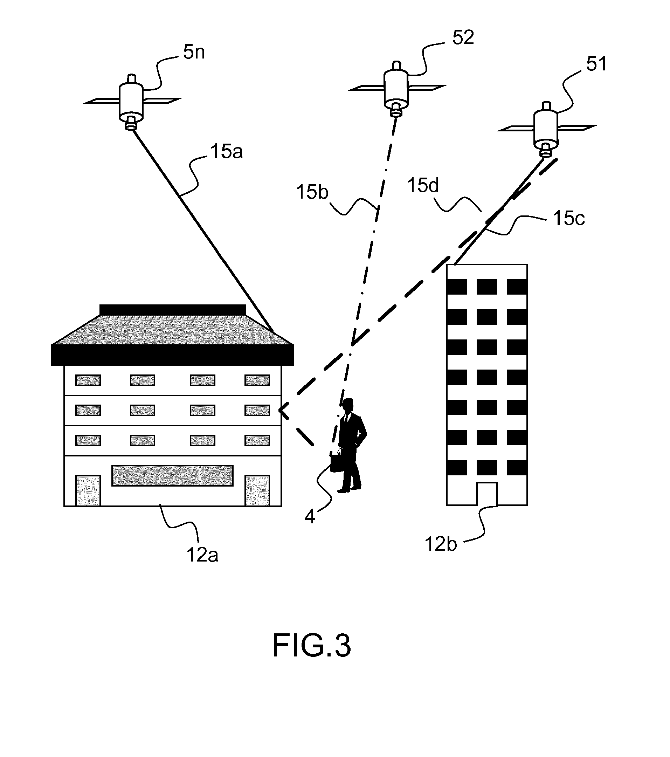

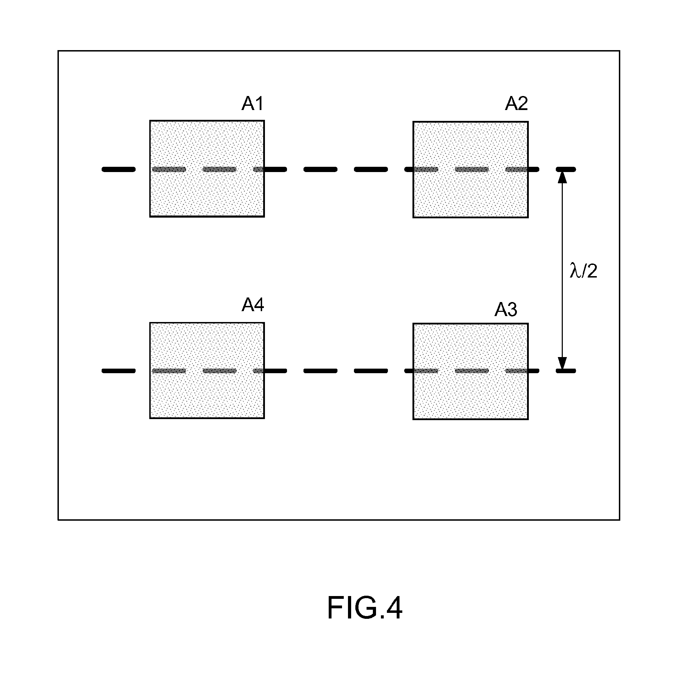

En milieu urbain, comme représenté par exemple sur la figure 3, certains signaux 15a, 15c issus des satellites sont réfléchis par des parois de bâtiments 12a, 12b entourant le récepteur 4 et n'arrivent pas sur le récepteur 4, d'autres signaux 15b arrivent directement sur le récepteur 4 et d'autres signaux 15d arrivent sur le récepteur après avoir été réfléchis par des parois d'un bâtiment 12a tel qu'un immeuble par exemple. Pour éviter des erreurs de détermination des distances séparant un satellite du récepteur, il est important de pouvoir éliminer les signaux réfléchis sur des parois telles que des murs d'immeuble et ayant donc subi des trajets multiples 15d avant d'arriver sur le récepteur 4. Pour cela, l'invention consiste à utiliser un récepteur 4 placé sur un utilisateur mobile, par exemple un piéton ou un utilisateur se déplaçant dans un véhicule mobile, et un réseau d'antennes placé sur le mobile, par exemple sur le toit d'un véhicule, le réseau d'antennes permettant de déterminer les angles d'arrivée de signaux réfléchis sur des parois de bâtiments. Chaque antenne est respectivement reliée à une chaîne de traitement des signaux reçus par ladite antenne. Un exemple de réseau d'antennes comportant quatre antennes A1, A2, A3 et A4 est représenté sur la figure 4. Les quatre antennes sont espacées les unes des autres d'une distance égale à une demi-longueur d'onde λ/2 et sont décorrélées les unes des autres. Chaque antenne peut par exemple être constituée d'un patch métallique et les quatre patchs métalliques correspondant aux quatre antennes peuvent être de même dimension et disposés en carré. Pour déterminer les trajets réfléchis sur des parois d'immeuble, il est nécessaire de connaitre le nombre de trajets réfléchis à rechercher. Par exemple, lorsque le mobile se trouve près d'un mur, à cause de ce mur, une première partie du signal de navigation émis par un satellite qui atteint le récepteur a un trajet direct, une deuxième partie du signal atteint d'abord le mur puis est réfléchie sur le mur avant d'arriver sur le récepteur. Lorsqu'il y a deux murs à proximité du récepteur, il peut y avoir deux réflexions successives sur les deux murs avant que le signal n'atteigne le récepteur.

Pour rechercher le nombre de trajets réfléchis, il est possible de procéder par itérations successives en faisant des hypothèses. Dans ce cas, la première hypothèse est qu'il y a un seul trajet réfléchi, puis deux trajets réfléchis, puis trois trajets réfléchis. A chaque itération, un algorithme est utilisé pour, à partir de l'information du nombre de trajets réfléchis, analyser le signal reçu par chacune des antennes du réseau et déterminer des angles d'arrivée des signaux réfléchis sur des parois d'immeubles. A la fin de chaque itération, un indicateur de qualité renseigne sur la fiabilité des angles d'arrivée obtenus. Lorsque toutes les itérations sont terminées, seule l'hypothèse ayant le meilleur indicateur de qualité est retenue. Ce procédé fonctionne bien mais présente l'inconvénient d'être très long et très consommateur de temps de calcul.

Pour rechercher le nombre de trajets réfléchis, le procédé selon l'invention consiste à utiliser une information de cartographie tridimensionnelle permettant à partir d'une position approximative du récepteur et pour chaque signal émis par un satellite, de déterminer le nombre de trajets réfléchis sur des parois avant de parvenir au récepteur. Pour cela, le récepteur GNSS 4 est équipé d'une carte géographique tridimensionnelle.

Pour une position donnée 14 du récepteur GNSS, à l'aide de la carte géographique tridimensionnelle, un lancé de rayon partant du récepteur est réalisé pour permettre de déterminer les différentes réflexions sur les parois, représentées graphiquement sous forme de facettes, des bâtiments entourant ledit récepteur. Le lancé de rayon est réalisé par un procédé graphique classique, utilisé par exemple dans le domaine des jeux électroniques en trois dimensions, consistant à partir de deux points sur une scène, à rechercher tous les trajets rectilignes directs et réfléchis sur des facettes situées dans la scène qui permettent de relier géométriquement ces deux points. Ainsi dans la figure 3, la connaissance de l'environnement en trois dimensions entourant le récepteur 4 permet de déterminer une réflexion provenant du satellite 51, suivant le trajet 15c du signal émis par le satellite 51.

La détermination des réflexions de signaux radiofréquence sur des murs réfléchissants obtenue à partir de la carte géographique tridimensionnelle n'est qu'approximative car les réflexions ne sont pas purement géométriques. En revanche, l'estimation ainsi réalisée permet de déterminer le nombre de réflexions principales. Leur angle d'arrivée et leur intensité est en revanche peu fiable.

Selon l'invention, le résultat de l'estimation du nombre de multi-trajets obtenu par utilisation de la carte géographique tridimensionnelle est ensuite appliqué en entrée d'un algorithme d'estimation des angles d'arrivée des multi-trajets pour initialiser cet algorithme. A partir de l'information du nombre de trajets réfléchis, l'algorithme analyse alors le signal reçu par chacune des antennes du réseau et détermine des angles d'arrivée des signaux réfléchis sur des parois d'immeubles.

Le procédé selon l'invention permet une bonne estimation des angles d'arrivée des différents signaux réfléchis. Il permet, en appliquant une loi d'amplitude et de phase sur les canaux de réception des antennes du réseau d'antennes, d'atténuer le diagramme d'antenne dans lesdites directions d'arrivée desdits multi-trajets. Enfin, en fonction du nombre de multi-trajets considérés, et du nombre d'antennes du réseau d'antennes, le procédé selon l'invention permet d'estimer le résiduel de perturbation sur la mesure. Ce résiduel est un indicateur de qualité de la mesure de distance séparant le récepteur du satellite.

L'estimation des directions d'arrivée des multi-trajets ainsi que les méthodes de lancer de rayon sont complexes en nombre d'opérations calculatoires. Pour optimiser le procédé d'estimation des directions d'arrivée des multi-trajets, avantageusement, l'invention peut comporter une étape préliminaire consistant à estimer le niveau de multi-trajets avant de lancer le procédé d'estimation décrit ci-dessus. L'estimation du niveau de multi-trajets consiste à partir des signaux de navigation reçus sur au moins deux antennes différentes séparées d'une demi longueur d'onde et appartenant au réseau d'antennes, à déterminer deux informations de distance, appelées pseudo-distances, concernant la distance de séparation entre le récepteur et le satellite. Le procédé consiste ensuite à faire la différence entre les deux valeurs de pseudo-distances obtenues à partir des deux antennes. Dans le cas où le niveau de multi-trajets est faible, la différence entre des retards estimés par chacune des boucles de poursuite de code d'étalement associée à chaque antenne donne un résultat quasiment nul correspondant à un bruit de fond, ce bruit de fond correspondant au bruit thermique des 2 chaines de réception des deux antennes, dont une bonne approximation est fourni par un bruit blanc gaussien.

Dans le cas où le niveau de multi-trajets est élevé, la variance de la différence de retard délivrée par les boucles de poursuite de code d'étalement appliquées aux deux chaines radiofréquence différentes sera élevée.

Soit $\rho^1{}_k$ la pseudo-distance mesurée par la boucle de code d'étalement traitant le signal du satellite k reçu par la première antenne, et soit $\rho^2{}_k$ la pseudo-distance mesurée sur la boucle de code d'étalement traitant le signal reçu par la seconde antenne. La différence $\delta\rho_k = \rho_k{}^1 - \rho_k{}^2$ représente la différence de chemin entre le satellite et les 2 antennes. L'écart type, grandeur mathématique correspondant à la racine carrée de la variance, estimé sur cette différence, noté $\sqrt{E\left(\delta_k\overline{\delta_k}\right)}$ est un estimateur de la puissance du bruit ajouté par l'environnement.

Il en résulte que la précision de mesure de pseudo-distance sur une antenne peut être bornée par :

$$\sqrt{\frac{E\left(\delta_k\overline{\delta_k}\right)}{2}}.$$

Cet indicateur permet de détecter la présence d'un environnement peu favorable et par suite de borner directement l'erreur de mesure de pseudo-distance.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé d'estimation de la direction d'arrivée de signaux de navigation sur un récepteur après réflexion par des parois dans un système de positionnement par satellite GNSS, le système de positionnement comportant au moins un satellite (51, 52, 5n) apte à émettre des signaux de navigation, le récepteur (4), placé dans un mobile, étant apte à recevoir les signaux de navigation par l'intermédiaire d'un réseau d'antennes comportant au moins deux antennes (A1 à A4) et à estimer la position dudit récepteur (4), le procédé étant **caractérisé en ce qu'**il comporte les étapes suivantes :

   a. placer le réseau d'antennes (A1 à A4) sur le mobile,
   b. placer une carte géographique tridimensionnelle dans le récepteur (4) du mobile,
   c. estimer une position du récepteur (4) à partir des signaux de navigation reçus par une antenne du réseau d'antennes,
   d. à partir de la carte géographique tridimensionnelle et de la position estimée du récepteur (4), à se positionner sur une scène correspondant à un environnement dans lequel se trouve le récepteur et à réaliser un lancé de rayon partant du récepteur,
   e. déduire, géométriquement, à partir du résultat du lancé de rayon, le nombre de trajets réfléchis (15d) sur des parois de bâtiments (12a, 12b) présentes dans la scène,
   f. sélectionner un algorithme d'estimation des angles d'arrivée de multi-trajets, les multi-trajets correspondant à des signaux réfléchis par des parois, initialiser cet algorithme par le nombre de trajets réfléchis déterminés à l'étape e et en déduire les angles d'arrivée des trajets réfléchis (15d) sur les parois avant d'atteindre le récepteur (4) à partir d'une analyse des signaux reçus par chacune des antennes du réseau d'antennes (A1 à A4).

2. Procédé selon la revendication 1, **caractérisé en ce que** les antennes (A1 à A4) du réseau d'antennes sont décorrélées les unes des autres.

3. Procédé selon la revendication 1, **caractérisé en ce que** avant de réaliser l'étape c relative à l'estimation de la position du récepteur (4), le procédé comporte une étape préliminaire consistant à estimer une erreur d'information de distance due à un multi-trajet (15d), l'étape préliminaire consistant :

   - à estimer une première pseudo-distance correspondant à une première information de distance entre le satellite (51 à 5n) et le récepteur (4) obtenue à partir d'un traitement du signal reçu par une première antenne du réseau d'antennes (A1 à A4),
   - à estimer une deuxième pseudo-distance correspondant à une deuxième information de distance entre le satellite (51 à 5n) et le récepteur (4) obtenue à partir d'un traitement du signal reçu par une deuxième antenne du réseau d'antennes,
   - à réaliser une différence entre les deux estimations obtenues et en déduire un écart type mathématique correspondant à cette différence,
   - à borner l'erreur d'information de distance due à un multi-trajet (15d) par un indicateur dépendant de l'écart type mathématique.

## Patentansprüche

1. Schätzverfahren der Eingangsrichtung von Navigationssignalen in einen Empfänger nach Reflexion an den Wände in einem GNSS-Satellitenpositioniersystem, wobei das Positioniersystem mindestens einen Satelliten (51, 52, 5n) aufweist, der imstande ist, Navigationssignale zu senden, wobei der Empfänger (4), der in einem mobilen Gerät platziert ist, imstande ist, die Navigationssignale über ein Antennennetzwerk, das mindestens zwei Antennen (A1 bis A4) umfasst, zu empfangen und die Position des Empfängers (4) zu schätzen, wobei das Verfahren dadurch gekemzeichnet ist, dass es die folgenden Schritte umfasst:

    a. Platzieren des Antennennetzwerks (A1 bis A4) auf dem mobilen Gerät,

    b. Platzieren einer dreidimensionalen geografischen Karte in dem Empfänger (4) des mobilen Geräts,

    c. Schätzen einer Position des Empfängers (4) ausgehend von den von einer Antenne des Antennennetzwerks empfangenen Navigationssignalen,

    d. Sich positionieren, ausgehend von der dreidimensionalen geografischen Karte und von der geschätzten Position des Empfängers (4), über einer Szenerie, die einem Umfeld entspricht, in dem sich der Empfänger befindet und Durchführen einer Strahlverfolgung ab dem Empfänger,

    e. geometrisches Ableiten, ausgehend vom Ergebnis der Strahlverfolgung, der Anzahl der an Wände von Gebäuden (12a, 12b), die in der Szenerie vorhanden sind, reflektierten Paths (15d),

    f. Auswählen eines Schätzalgorithmus der Multipath-Einfallswinkel, wobei die Multipaths an Wänden reflektierten Signalen entsprechen, Initialisieren dieses Algorithmus mit der Anzahl der reflektierten, in Schritt e bestimmten Paths und Ableiten daraus der Einfallswinkel der an den Wänden reflektierten Paths (15d) vor Erreichen des Empfängers (4), ausgehend von einer Analyse der durch jede Antenne des Antennennetzwerks (A1 bis A4) empfangenen Signale.

**2.** Verfahren nach Anspruch 1, **dadurch gekennzeichnet, dass** die Antennen (A1 bis A4) des Antennennetzwerks voneinander dekorreliert sind.

**3.** Verfahren nach Anspruch 1, **dadurch gekennzeichnet, dass** das Verfahren vor Durchführung von Schritt c, der sich auf das Schätzen der Position des Empfängers (4) bezieht, einen vorherigen Schritt aufweist, der darin besteht, einen Distanzinformationsfehler wegen eines Multipaths (15d) zu schätzen, wobei der vorherige Schritt besteht im:

    - Schätzen einer ersten Pseudodistanz, die einer ersten Distanzinformation zwischen dem Satelliten (51 bis 5n) und dem Empfänger (4) entspricht, die im Ergebnis einer Verarbeitung des Signals erhalten wird, das von einer ersten Antenne des Antemennetzwerks (A1 bis A4) erhalten wird,

    - Schätzen einer zweiten Pseudodistanz, die einer zweiten Distanzinformation zwischen dem Satelliten (51 bis 5n) und dem Empfänger (4) entspricht, die im Ergebnis einer Verarbeitung des Signals erhalten wird, das von einer zweiten Antenne des Antennennetzwerks erhalten wird,

    - Ermitteln einer Differenz zwischen den zwei erhaltenen Schätzungen und Ableiten daraus einer mathematischen Standardabweichung, die dieser Differenz entspricht,

    - Begrenzen des Distanzinformationsfehlers wegen eines Multipaths (15d) mit einem von der mathematischen Standardabweichung abhängenden Indikator.

**Claims**

**1.** A method for estimating the direction of arrival of navigation signals on a receiver after being reflected by walls in a GNSS satellite positioning system, said positioning system comprising at least one satellite (51, 52, 5n) capable of transmitting navigation signals, said receiver (4), placed in a movable object, being capable of receiving said navigation signals through an antenna array comprising at least two antennae (A1 to A4) and of estimating the position of said receiver (4), said method being **characterised in that** it comprises the following steps:

    a. installing said antenna array (A1 to A4) on said movable object;

    b. installing a three-dimensional geographical map in said receiver (4) of said movable object;

    c. estimating a position of said receiver (4) on the basis of navigation signals received by an antenna of said antenna array;

    d. selecting, on the basis of said three-dimensional geographical map and of the estimated position of said receiver (4), a scene that corresponds to an environment in which said receiver is located and carrying out ray casting from said receiver;

    e. geometrically deducing, on the basis of the result of the ray casting, the number of paths (15d) reflected on walls of buildings (12a, 12b) present in the scene;

    f. selecting an algorithm for estimating angles of arrival of multiple paths, said multiple paths corresponding to signals reflected by walls, initialising said algorithm by the number of reflected paths determined during step e and deducing therefrom, on the basis of an analysis of the signals received by each antenna (A1 to A4) of said antenna array, the angles of arrival of said paths (15d) reflected on the walls before reaching said receiver (4).

**2.** The method according to claim 1, **characterised in that** said antennae (A1 to A4) of said antenna array are decorrelated relative to each other.

**3.** The method according to claim 1, **characterised in that**, before carrying out step c of estimating the position of said receiver (4), said method comprises a preliminary step comprising estimating an error in distance information due to a multiple path (15d), said preliminary step comprising:

- estimating a first pseudo-distance corresponding to a first item of distance information between said satellite (51 to 5n) and said receiver (4) obtained from processing the signal received by a first antenna of said antenna array (A1 to A4);
- estimating a second pseudo-distance corresponding to a second item of distance information between said satellite (51 to 5n) and said receiver (4) obtained from processing the signal received by a second antenna of said antenna array;
- finding a difference between the two obtained estimations and deducing therefrom a mathematical standard deviation corresponding to this difference;
- limiting the error in distance information due to a multiple path (15d) using an indicator that depends on the mathematical standard deviation.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 6784831 B

**Littérature non-brevet citée dans la description**

• **S. ROUGERIE.** Multipath mitigation methods based on antenna array. *ION NTM,* 2011